# EUROPÄISCHE PATENTSCHRIFT

(11) **EP 2 651 704 B1**
(45) Veröffentlichungstag und Bekanntmachung des Hinweises auf die Patenterteilung: **23.09.2015**
(21) Anmeldenummer: 11782435.9
(22) Anmeldetag: 16.11.2011
(51) Int. Cl.: B60S 1/16

(54) **ANTRIEBSVORRICHTUNG FÜR EINE FAHRZEUG-SCHEIBENWISCHERANLAGE**
DRIVING DEVICE FOR A VEHICLE WINDOW WIPER SYSTEM
DISPOSITIF D'ENTRAÎNEMENT POUR UN ÉQUIPEMENT ESSUIE-GLACE DE VÉHICULE

(30) Priorität: 14.12.2010 DE 102010062986
(43) Veröffentlichungstag der Anmeldung: 23.10.2013
(73) Patentinhaber: Robert Bosch GmbH, 70442 Stuttgart (DE)
(72) Erfinder: REITH, Michael, 77815 Buehl-Vimbuch (DE); ALBRECHT, Gerard, F-67690 Hatten (FR); LIPPS, Verena, 77833 Ottersweier (DE); BOHN, Roland, 77815 Buehl (DE); Sterns, Orlando, 76228 Karlsruhe (DE)
(86) Internationale Anmeldenummer: PCT/EP2011/070188
(87) Internationale Veröffentlichungsnummer: WO 2012/079894

(56) Entgegenhaltungen:
- EP-A1- 0 711 689
- DE-A1- 3 920 731
- FR-A1- 2 940 217

## Beschreibung

Die Erfindung betrifft eine Antriebsvorrichtung für eine Fahrzeug-Scheibenwischeranlage gemäß dem Oberbegriff des Anspruches 1.

### Stand der Technik

Eine aus der DE 39 20 731 C2 bekannte Fahrzeug-Scheibenwischeranlage umfasst eine Antriebsvorrichtung mit einem elektrischen Antriebsmotor und einem nachgeordneten Getriebe zum drehbeweglich pendelnden Antrieb einer Abtriebswelle. Als eingangsseitiges Getriebeglied des in einem Getriebegehäuse angeordneten Getriebes ist eine vom Antriebsmotor angetriebene Schnecke vorgesehen, welche ein Schneckenrad antreibt. Dieses ist über einen Kurbeltrieb mit einem auf der Abtriebswelle sitzenden abtriebsseitigen Getriebeglied drehmomentübertragend verbunden. Hierzu ist die am Schneckenrad exzentrisch angelenkte Koppel über eine Schwinge zur Abtriebswelle derart abgestützt, dass an der Koppel und auf der Abtriebswelle angeordnete Zahnradsegmente miteinander in Eingriff stehen.

Die als Schubstange ausgebildete Koppel greift mit ihrem Zahnradsegment in das auf der Abtriebswelle angeordnete Zahnradsegment ein und es ist ebenenversetzt zu der so aufgebauten, über die Zahnradsegmente erfolgenden Antriebsverbindung eine Anschlageinrichtung vorgesehen. Diese den Drehwinkel der Abtriebswelle begrenzende Anschlageinrichtung umfasst einen über die Abtriebswelle konzentrisch geführten Mitnehmer, welcher einen zur Abtriebswelle gleichgerichtet sich erstreckenden Mitnehmerarm aufweist, der im Überdeckungsbereich zu einem am Getriebegehäuse vorgesehenen, die Abtriebswelle lagernd aufnehmenden Dom in zur Abtriebswelle konzentrischen Führungsbahnen läuft und dem seitens der Führungsbahnen den Schwenkweg begrenzende Anschlagteile zugeordnet sind.

Der in Achsrichtung der Abtriebswelle mehrschichtige Aufbau der Antriebsvorrichtung mit axialem Versatz der Anschlageinrichtung zur Schwenkebene des Kurbelgetriebes bedingt wegen der abzufangenden Kippkräfte eine entsprechend verwindungssteife Ausbildung des Getriebegehäuses, zumal dieses aufbaubedingt auch in Achsrichtung der Abtriebswelle relativ hoch ausgebildet sein muss, um die ebenenversetzte Anordnung des auf der Abtriebswelle angeordneten Zahnradsegmentes und der Anschläge zu ermöglichen. Sowohl ein solcher Raumbedarf als auch aufbaubedingt auf das Getriebegehäuse wirkende Verwindungskräfte sind unerwünscht, nicht nur wegen der im Anbaubereich von Scheibenwischeranlagen bei Fahrzeugen gegebenen Raumverhältnissen, sondern auch, weil die auftretenden Belastungen Schwingungen nach sich ziehen können, die das Wischverhalten der Scheibenwischeranlage beeinträchtigen.

### Offenbarung der Erfindung

Der Erfindung liegt die Aufgabe zugrunde, eine Scheibenwischanlage hinsichtlich ihrer Antriebsvorrichtung so auszugestalten, dass sie bei möglichst kompaktem und leichtem Aufbau eine gleichmäßige und auch in den Anschlaglagen gut beherrschbare, schwingungsarme Betriebsweise ermöglicht.

Erreicht wird dies mit den Merkmalen des Anspruches 1, da ungeachtet der Verspannung der Antriebsvorrichtung durch die drehwinkelbegrenzende Anschlageinrichtung in den Umkehrlagen die aufgezeigte Lagezuordnung der Getriebeglieder und des Kurbelgetriebes eine günstige Aufnahme der entsprechenden Abstützkräfte ermöglicht und zudem durch die ebenengleiche Lage des Getriebeglieder einerseits und der Anschlageinrichtung sowie der Koppel andererseits in eng benachbarten Ebenen bei guter Abstützung ein sehr flacher und verwindungssteifer Aufbau erreicht werden kann.

So macht es die Erfindung insbesondere möglich, die in einer Ebene liegenden drehbeweglichen Getriebeglieder, gebildet durch ein eingangsseitiges Zahnrad, insbesondere in Form eines Stirnrades, gegebenenfalls in Form eines Schneckenrades, und weitere miteinander kämmende Getriebegliedern, nämlich ein abtriebsseitiges Getriebeglied, insbesondere in Form eines Ritzels, und ein schwenkbares, insbesondere als Zahnradsegment ausgebildetes Getriebeglied jeweils über eine ihrer Flanken zum Boden oder Deckel geführt abzustützen, wobei insbesondere eine Abstützung gegenüber dem Boden des Gehäuses zweckmäßig ist. Diese Abstützung kann in besonders einfacher Weise durch zur Drehachse des jeweiligen Getriebegliedes radial beabstandete, bevorzugt konzentrische rippenförmige Erhebungen erfolgen.

Entsprechend dieser axialen, und damit flankenseitigen Abstützung der in einer Ebene liegenden Getriebeglieder gegen Boden oder Deckel des Getriebegehäuses, hier bevorzugt gegen den Boden des Gehäuses, erweist es sich als zweckmäßig, eine axiale Abstützung der Koppel nach der Gegenseite, also bevorzugt gegen den Deckel des Getriebegehäuses über die Koppel mit den Getriebegliedern verbindenden Drehzapfen vorzusehen. Bevorzugt sind hierzu den Drehzapfen deckelseitig zugeordnete Laufbahnen vorgesehen, die zugleich auch Führungsbahnen bilden können, so dass längs des jeweiligen Drehweges eine axiale Abstützung wie auch eine radiale Führung der Drehzapfen realisiert ist.

Insbesondere erweist es sich bezogen auf die Ausgestaltung der Getriebeverbindung der Antriebsvorrichtung als zweckmäßig, wenn das mit dem abtriebsseitigen, auf der Abtriebswelle des Getriebes angeordneten Getriebeglied, bevorzugt einem Ritzel, kämmende und mit dem Stirnrad über die Koppel verbundene Getriebeglied als Schwinge ausgebildet ist, die gegenüberliegend zu ihrem in das abtriebsseitige Getriebeglied mit seinen Zähnen eingreifenden Zahnradsegment über einen Drehzapfen im Gehäuse abgestützt ist. Zweckmäßigerweise ist dieser Drehzapfen ebenso wie die Welle des Stirnrades axial und radial, bezogen auf die bevorzugte Ausführungsform, im Deckel abgestützt und gelagert, so dass sich letztlich durch die erfindungsgemäße Anordnung und Abstützung der Getriebeglieder auch für das Gehäuse eine Aussteifung ergibt.

Der geschilderte Aufbau der Antriebsvorrichtung mit in der Getriebeverbindung liegendem Kurbeltrieb zeichnet sich auch dadurch durch besondere Einfachheit aus, dass eines der in einer Ebene liegenden Getriebeglieder als Schwinge ausgestaltet ist und als solche gleichzeitig einen Teil des Kurbeltriebes bildet.

Die erfindungsgemäße, ebenengleiche Anordnung des antriebsseitigen Getriebegliedes, insbesondere in Form eines Stirnrades und von weiteren miteinander kämmenden Getriebegliedern, die insbesondere durch ein das abtriebsseitige Getriebeglied bildendes Ritzel und die mit diesem kämmende Schwinge gebildet sind, ermöglicht auch eine besonders einfache Ausgestaltung der Anschlageinrichtung. Dies vor allem dadurch, dass an dem das abtriebsseitige Getriebeglied bildenden Ritzel achsparallel zur Ritzelwelle ein Anschlagkörper, bevorzugt in Form eines Anschlagstiftes, vorgesehen ist, der entsprechend der pendelnden Drehbewegung des abtriebsseitigen Getriebegliedes zwischen gehäuseseitige Anschlagteile eingreift.

Wie der Mitnehmer, der als zum Ritzel angesetzter oder aus dem Ritzel ausgeformter Zapfen gestaltet sein kann, können auch die Anschlagteile zum Gehäuse, bezogen auf das bevorzugte Ausführungsbeispiel zum Deckel angesetzte oder angeformte Teile gebildet sein, womit sich auch in einfacher Weise eine Lösung mit austauschbaren Anschlagteilen realisieren lässt. Dies kann insbesondere zweckmäßig sein, um bei gleicher Grundform und bei gleichem Grundaufbau der Antriebsvorrichtung durch Austauschen der Anschlagteile entsprechende Umkehrlagen festzulegen, wobei die Anschlagteile auch als elastische oder teilelastische Anschlagteile ausgebildet sein können.

Weitere Einzelheiten und Merkmale der Erfindung ergeben sich aus den Ansprüchen, der Zeichnungsbeschreibung und den Zeichnungen. Es zeigen:
- Fig. 1: schematisiert und vereinfacht in Perspektive dargestellt einen Ausschnitt der erfindungsgemäßen Antriebsvorrichtung mit in deren Gehäuse aufgenommenen Getriebegliedern und zugehörigem Kurbeltrieb, wobei das Gehäuse ohne den abgenommenen, zum Boden gegenüberliegenden Deckel dargestellt ist,
- Fig. 2: eine separate Darstellung des als abtriebsseitiges Getriebeglied eingesetzten Ritzels mit daran vorgesehenem Anschlagkörper in Form eines Anschlagstiftes,
- Fig. 3: wiederum in Perspektive, eine Draufsicht auf den in Fig. 1 zum geöffneten Gehäuse aufzusetzenden Deckel, und
- Fig. 4: die vergrößerte Darstellung eines Ausschnitts IV in Fig. 3 bei Sicht auf die dem Gehäuseinnenraum zugewandte Unterseite des Deckels.

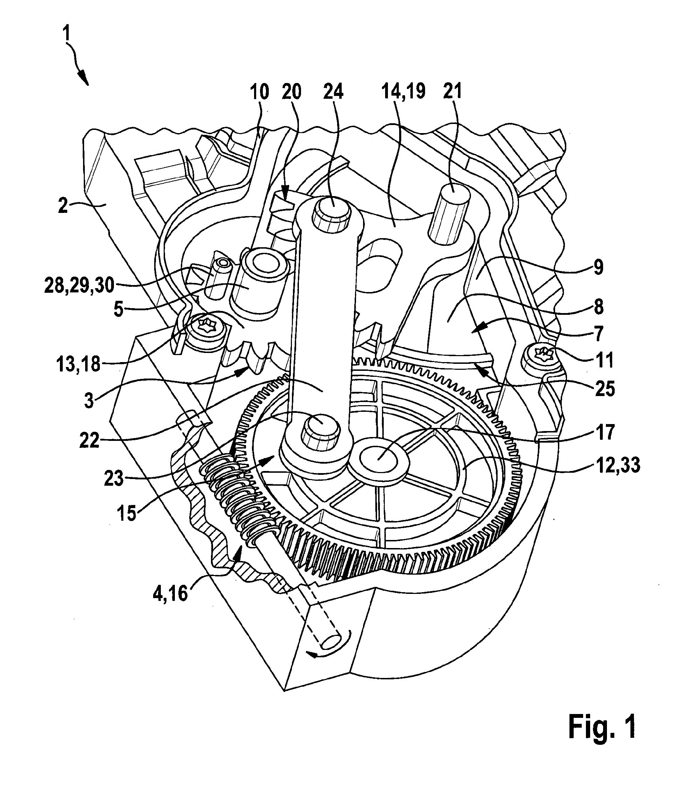

Fig. 1 zeigt schematisiert vereinfacht und perspektivisch einen Ausschnitt einer Antriebsvorrichtung 1 für Fahrzeugscheibenwischeranlagen, wie sie beispielsweise für Front- oder Heckscheiben von Fahrzeugen vorgesehen sind, wobei sich der hier gezeigte Ausschnitt der Antriebsvorrichtung 1 im Wesentlichen auf die Darstellung des Getriebegehäuses 2 und der in diesem liegenden Teil einer Getriebeverbindung 3 beschränkt, die ausgehend von einem Schneckentrieb 4 auf eine Abtriebswelle 5 ausläuft, welche, was nicht weiter gezeigt ist, entsprechend der Pendelbewegung von front- oder heckseitigen Scheibenwischern zwischen Umkehrlagen hin- und hergehend angetrieben ist.

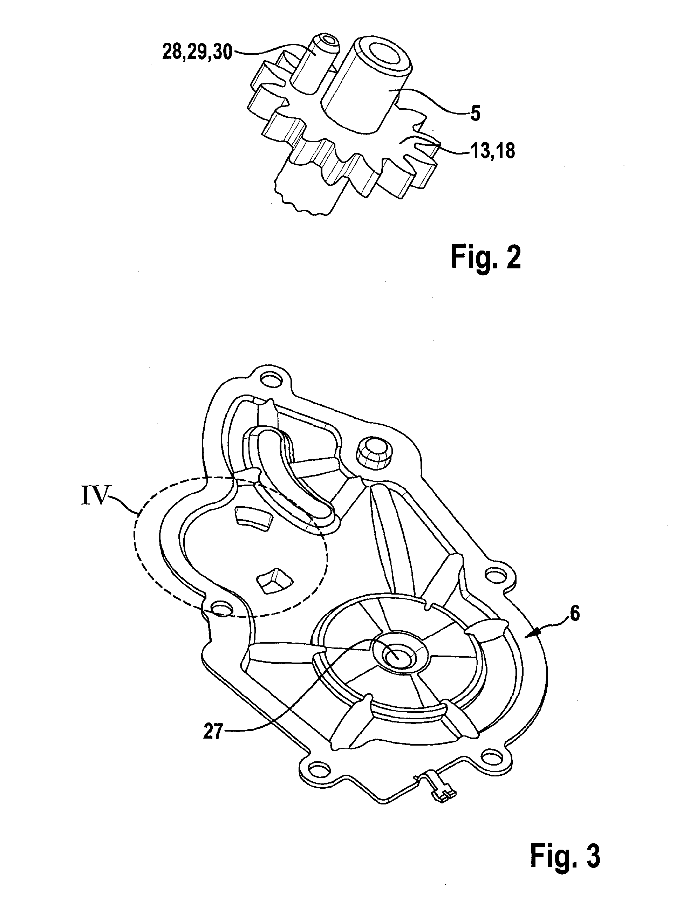

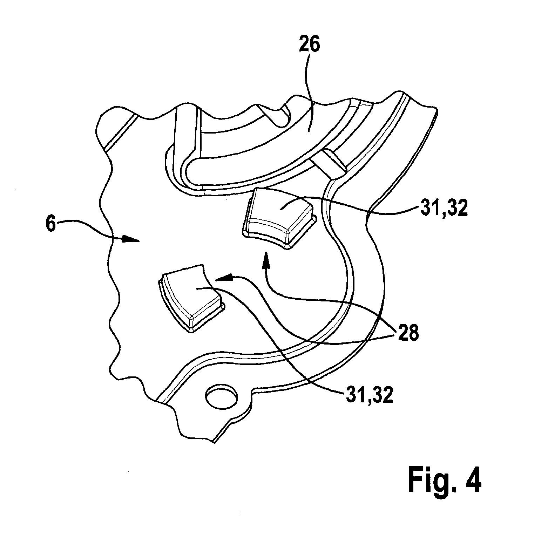

Dargestellt ist das Getriebegehäuse 2 bei vom Gehäuse abgenommenem Deckel 6 gemäß Fig. 3 und 4, der, auf das Gehäuse 2 aufgesetzt, den Gehäuseinnenraum 7 gegenüberliegend zum Boden 8 überdeckt und auf vom Boden 8 ausgehende Gehäuseseitenwände 9 aufzusetzen ist. Die Gehäuseseitenwände 9 laufen stirnseitig in einem zum aufzusetzenden Deckel 6 umschließenden Rand 10 aus und der Deckel 6 ist innerhalb des Randes 10 gegen die Stirnseiten der Gehäuseseitenwände 9 über Verschraubungen 11 in bekannter Weise zu fixieren.

Boden 8 und Deckel 6 bilden im Verbund mit den Gehäuseseitenwänden 9 die Umgrenzung für den Gehäuseinnenraum 7 und Trag- sowie Abstützteile für die Getriebeverbindung 3, welche im Ausführungsbeispiel drehbare Getriebeglieder 12 bis 14 und einen Kurbeltrieb 15 umfasst, der unter Nutzung einzelner Getriebeglieder als Elemente des Kurbeltriebs aufgebaut ist.

Im Einzelnen ist der Schneckentrieb 4 durch eine Antriebsschnecke 16 veranschaulicht, die sich tangential zu dem mit seiner Drehachse 17 zwischen Deckel 6 und Boden 8 liegendem Zahnrad, insbesondere einem Stirnrad 33 erstreckt, zu dem benachbart und ebenengleich, dem Boden 8 zugeordnet, als abtriebsseitiges Getriebeglied 13 ein Ritzel 18 sowie, mit diesem kämmend, ein weiteres Getriebeglied 14 in Form einer Schwinge 19 vorgesehen sind. Die Drehachse 17 des Stirnrades 33, die Abtriebswelle 5 des Ritzels 18 und der Drehzapfen 21, über den die Schwinge 19 zum Gehäuse pendelnd verschwenkbar abgestützt ist, liegen parallel zueinander. Die Schwinge 19 ist, in Achsrichtung des Drehzapfens 21 gesehen, gegen den Verzahnungsbereich 20 sich verbreiternd glockenförmig ausgebildet und im Bereich ihres Scheitels auf dem Drehzapfen 21 gelagert.

Der Kurbeltrieb 15 umfasst die Koppel 22, die sich überbrückend zum Stirnrad 33 und zur Schwinge 19 auf der vom Boden 8 abgewandten Seite erstreckt und ist über Drehzapfen 23 und 24 mit dem Stirnrad 33 und der Schwinge 19 verbunden. Der Drehzapfen 23 liegt radial beabstandet zur Drehachse 17 des Stirnrades 33, wobei durch den zwischen der Achse 17 und dem Drehzapfen 23 liegenden Radialbereich des Stirnrades 33 die Kurbel des Kurbeltriebes gebildet ist. Hierzu korrespondierend bildet der Radialabschnitt der Schwinge 19 zwischen den Drehzapfen 21 und 24 einen Bestandteil des Kurbeltriebes 15, so dass dieser vorliegend lediglich die Koppel 22 als zusätzliches Element zu bereits vorhandenen Getriebegliedern bedingt, was zu einem baulich sehr einfachen Getriebeaufbau führt, bei dem zunächst schon die drehbaren Getriebeglieder 12 bis 14 zum Boden nicht nur benachbart und ebenenparallel angeordnet sind, sondern bevorzugt auch ebenenparallel abgestützt sein können. Dies gilt insbesondere, wie ersichtlich, auch für das durch die Schwinge 19 gebildete Getriebeglied 14, das nahe seinem Verzahnungsbereich bodenseitig auf einer Führungsrippe 25 aufliegt. Entsprechende Anlagen bzw. Führungen sind zweckmäßigerweise auch am Deckel 6 vorgesehen, wobei eine Führungsrinne 26 dem in der Verbindung der Koppel 22 zur Schwinge 19 vorgesehenen Drehzapfen 24 zugeordnet ist und eine entsprechende Führungsabstützung 27 zum Deckel 6 für den Drehzapfen 23 in der Verbindung der Koppel 22 zum Schneckenrad 12 in Fig. 3 angedeutet ist.

Die Getriebeglieder 12 bis 14 und die Koppel 22 des Kurbeltriebs 15 sind somit bei axialer Abstützung zu Boden 8 und zu Deckel 6 im Gehäuseinnenraum 7 angeordnet, wobei sich praktisch eine wechselseitige Abstützung ergibt, die in Verbindung mit dem durch den Getriebeaufbau bedingten günstigen Übertragungsverhältnissen zu geringen Belastungen des Getriebegehäuses 2 führt, und damit eine leichte und trotzdem formsteife Gestaltung desselben ermöglicht.

In diesem Sinne wirkt sich insbesondere auch aus, dass die nur in Teilen dargestellte Anschlageinrichtung 28 ein mit dem abtriebsseitigen, durch das Ritzel 18 gebildeten Getriebeglied 13 verbundenes erstes Anschlagteil 29 aufweist, das beispielsweise durch einen Anschlagstift 30 als Anschlagkörper gebildet ist und das sich axial zwischen die deckelseitig vorgesehenen, den Schwenkweg der Abtriebswelle 5 beschränkenden zweiten Anschlagteile 31 erstreckt, so dass sich eine im Wesentlichen gleiche Wirkebene für die von der Koppel 22 auf die Schwinge 19 übertragenen Antriebskräfte und die über die zweiten Anschlagteile 31 in den Umkehrlagen abzufangenden Kräfte ergibt. Dies mit der Folge, dass Kippkräfte weitgehend vermieden werden, was wiederum einen leichteren Aufbau der Getriebeverbindung 3 und des Gehäuses 2 ermöglicht, ohne zu die Funktion beeinträchtigenden Verformungen und Schwingungen zu führen.

Die zweiten, gehäuseseitigen Anschlagteile 31 sind in Fig. 4 als durch Ausprägungen des Deckels 6 gebildete Vorsprünge 32 dargestellt. Im Rahmen der Erfindung liegt es aber selbstverständlich auch, diese Ausprägungen zum Deckel 6 in Gegenrichtung vorzusehen und dadurch die zweiten Anschlagteile 31 gegebenenfalls durch Steckverbindung zum Deckel 6 zu fixieren. Eine solche Ausgestaltung macht es insbesondere auch möglich, die zweiten Anschlagteile 31 auswechselbar zu gestalten, so dass sich der jeweilige Pendelweg zwischen den Anschlagteilen 31 durch Auswechseln der Anschlagteile 31 fallabhängig einstellen lässt. Insbesondere bietet eine solche Lösung auch die Möglichkeit, die Anschlagteile 31 zumindest teilweise elastisch, und insbesondere progressiv federnd aufzubauen, so dass die Pendelbewegung in den Umkehrlagen dämpfend abgefangen wird, was wiederum die Beanspruchungen und Geräusche des Getriebes ebenso verringert wie der Schwingungsdämpfung dient.

Nicht dargestellt ist im Ausführungsbeispiel, dass die das Ritzel 18 tragende Abtriebswelle 5 in einem in den Zeichnungen nicht berücksichtigten, deckelseitigen Dom verläuft auslaufend zu dem die Verbindung zu den Scheibenwischern erfolgt.

Eine entsprechende Anschlagdämpfung lässt sich im Rahmen der Erfindung auch dadurch erreichen, dass das erste, als Anschlagstift 30 ausgebildete Anschlagteil 29 gegebenenfalls mit einer elastischen Ummantelung versehen ist, so dass auch bei lediglich durch Ausprägungen zum Deckel 6 gebildeten zweiten Anschlagteilen 31 in den Umkehrlagen eine dämpfende Abstützung erreicht wird. Nicht dargestellt ist des Weiteren auch, dass schon über die Bemessung der Führungsrinne 26 im Zusammenwirken mit dem Drehzapfen 24 eine Wegbegrenzung realisiert werden kann, so dass gegebenenfalls die in den Umkehrlagen auftretenden Kräfte zumindest teilweise auch aufgeteilt abgefangen werden können.

## Patentansprüche

1. Antriebsvorrichtung für eine Fahrzeug-Scheibenwischeranlage mit einem Kurbeltrieb (15) in einer Getriebeverbindung (3) zwischen einem eingangsseitigen Getriebeglied (12, 33) und weiteren, miteinander kämmenden Getriebegliedern (13, 18; 14, 19), deren abtriebsseitiges, auf der Abtriebswelle (5) des Getriebes angeordnetes Getriebeglied (13, 18) ein erstes Anschlagteil (29, 30) einer den Drehwinkel der Abtriebswelle (5) begrenzenden Anschlageinrichtung (5) trägt, die zweite, an einer der von der Abtriebswelle des Getriebes durchsetzten, Deckel (6) und Boden (8) des Getriebegehäuses (2) bildenden Stirnwände des Getriebegehäuses (2) vorgesehene, gehäuseseitige Anschlagteile (31, 32) aufweist, **dadurch gekennzeichnet, dass** die über den Kurbeltrieb (15) antriebsverbundenen Getriebeglieder (12, 13, 14) in einer gemeinsamen Ebene liegen, dass das mit dem abtriebsseitigen, auf der Abtriebswelle (5) angeordneten Getriebeglied (13) kämmende Getriebeglied (14) durch eine über die Koppel (22) des Kurbeltriebes (15) angetriebene Schwinge (19) gebildet ist, und dass die Koppel (22) und die zweiten Anschlagteile (31) in einer gemeinsamen, zu einer der Stirnseiten des Getriebegehäuses (2) benachbarten und zur Ebene der durch den Kurbeltrieb (15) antriebsverbundenen Getriebeglieder (12, 13, 14) parallelen Wirkebene liegen.

2. Antriebsvorrichtung nach Anspruch 1, **dadurch gekennzeichnet, dass** die über die Koppel (22) angetriebene Schwinge (19) als einarmige Schwinge an ihrem vom abtriebsseitigen Getriebeglied (29) abgewandten Ende gehäuseseitig gelagert und benachbart zu ihrem Verzahnungsbereich (20) mit der Koppel (22) verbunden ist.

3. Antriebsvorrichtung nach Anspruch 1 oder 2, **dadurch gekennzeichnet, dass** das abtriebsseitige Getriebeglied (29) durch ein gehäuseseitig gelagertes Ritzel (18) gebildet ist.

4. Antriebsvorrichtung nach einem der vorhergehenden Ansprüche, **dadurch gekennzeichnet, dass** die über den Kurbeltrieb (15) antriebsverbundenen Getriebeglieder (12, 13, 14) benachbart zum Boden (8) des Getriebegehäuses (2) und entlang desselben geführt angeordnet sind.

5. Antriebsvorrichtung nach einem der vorhergehenden Ansprüche, **dadurch gekennzeichnet, dass** die gehäuseseitigen zweiten Anschlagteile (31) an der durch den Deckel (8) gebildeten und von der Abtriebswelle (5) durchsetzten Stirnseite des Getriebegehäuses (2) vorgesehen sind.

6. Antriebsvorrichtung nach einem der vorhergehenden Ansprüche, **dadurch gekennzeichnet, dass** das abtriebsseitige Getriebeglied (13) einen zur Abtriebswelle (5) gleichgerichteten und zwischen die zweiten Anschlagteile (31) hineinragenden Anschlagkörper, insbesondere einen Anschlagstift (30) trägt.

7. Antriebsvorrichtung nach einem der vorhergehenden Ansprüche, **dadurch gekennzeichnet, dass** die zweiten Anschlagteile (31) in Vertiefungen des Deckels (6) aufgenommen sind und umfangsseitige Anschlagflächen aufweisen.

8. Anschlagvorrichtung nach Anspruch 7, **dadurch gekennzeichnet, dass** die zweiten Anschlagteile (31) auswechselbar angeordnet sind.

9. Antriebsvorrichtung nach einem der vorhergehenden Ansprüche, **dadurch gekennzeichnet, dass** die Koppel (22) an einem Getriebeglied (12), insbesondere einem als Stirnrad (33) ausgebildeten Getriebeglied (12) als eingangsseitigem Getriebeglied (12) angelenkt ist.

10. Antriebsvorrichtung nach einem der vorhergehenden Ansprüche, **dadurch gekennzeichnet, dass** die zweiten Anschlagteile (31) als federnd nachgiebige Dämpfungsglieder ausgebildet sind.

## Claims

1. Driving device for a vehicle window wiper system with a crank drive (15) in a geared connection (3) between an input-side gear member (12, 33) and further intermeshing gear members (13, 18; 14, 19), of which an output-side gear member (13, 18), which is arranged on the output shaft (5) of the gearing, bears a first stop part (29, 30) of a stop device (5) which limits the angle of rotation of the output shaft (5) and has second, housing-side stop parts (31, 32) which are provided on one of the end walls of the gear housing (2), through which the output shaft of the gearing passes and which form cover (6) and base (8) of the gear housing (2), **characterized in that** the gear members (12, 13, 14) which are connected in terms of drive via the crank drive (15) lie in a common plane, **in that** the gear member (14) meshing with the output-side gear member (13) arranged on the output shaft (5) is formed by a link (19) driven via the connecting rod (22) of the crank drive (15), and **in that** the connecting rod (22) and the second stop parts (31) lie in a common plane of action which is adjacent to one of the end sides of the gear housing (2) and is parallel to the plane of the gear members (12, 13, 14) which are connected in terms of drive by the crank drive (15).

2. Driving device according to Claim 1, **characterized in that** the link (19) which is driven via the connecting rod (22) is mounted on the housing side as a one-armed link at the end thereof facing away from the output-side gear member (29) and is connected adjacent to the toothing region (20) thereof to the connecting rod (22).

3. Driving device according to Claim 1 or 2, **characterized in that** the output-side gear member (29) is formed by a pinion (18) mounted on the housing side.

4. Driving device according to one of the preceding claims, **characterized in that** the gear members (12, 13, 14) which are connected in terms of drive via the crank drive (15) are arranged adjacent to the base (8) of the gear housing (2) and in a manner guided along same.

5. Driving device according to one of the preceding claims, **characterized in that** the housing-side second stop parts (31) are provided on that end side of the gear housing (2) which is formed by the cover (8) and through which the output shaft (5) passes.

6. Driving device according to one of the preceding claims, **characterized in that** the output-side gear member (13) has a stop body which is directed in the same direction as the output shaft (5) and projects between the two stop parts (31), in particular a stop pin (30).

7. Driving device according to one of the preceding claims, **characterized in that** the second stop parts (31) are accommodated in depressions of the cover (6) and have circumferential-side stop surfaces.

8. Driving device according to Claim 7, **characterized in that** the second stop parts (31) are arranged exchangeably.

9. Driving device according to one of the preceding claims, **characterized in that** the connecting rod (22) is coupled to a gear member (12), in particular to a gear member (12) which is designed as a spur gear (33) and is in the form of an input-side gear member (12).

10. Driving device according to one of the preceding claims, **characterized in that** the second stop parts (31) are designed as resiliently flexible damping members.

## Revendications

1. Dispositif d'entraînement pour un équipement d'essuie-glace de véhicule comportant une transmission à manivelle (15) dans une liaison de transmission (3) entre un organe de transmission du côté d'entrée (12, 33) et d'autres organes de transmission qui s'engrènent les uns avec les autres (13, 18 ; 14, 19), dont l'organe de transmission du côté de sortie (13, 18), disposé sur l'arbre de sortie (5) de la transmission, supporte une première partie de butée (29, 30) d'un dispositif de butée (5) délimitant l'angle de rotation de l'arbre de sortie (5), qui présente des deuxièmes parties de butée du côté du carter (31, 32), prévues sur une des parois frontales du carter de transmission (2) formant le couvercle (6) et la base (8) du carter de transmission (2), traversées par l'arbre de sortie de la transmission, **caractérisé en ce que** les organes de transmission (12, 13, 14) reliés en entraînement par l'intermédiaire de la transmission à manivelle (15) sont situés dans un plan commun, **en ce que** l'organe de transmission (14) qui s'engrène avec l'organe de transmission (13) disposé sur l'arbre de sortie (5) du côté de sortie est formé par un balancier (19) entraîné par la bielle (22) de la transmission à manivelle (15), et **en ce que** la bielle (22) et les deuxièmes parties de butée (31) sont situées dans un plan de travail commun, voisin d'un des côtés frontaux du carter de transmission (2) et parallèle au plan des organes de transmission (12, 13, 14) reliés en entraînement par l'intermédiaire de la transmission à manivelle (15).

2. Dispositif d'entraînement selon la revendication 1, **caractérisé en ce que** le balancier (19) entraîné par l'intermédiaire de la bielle (22) est positionné comme un balancier à un bras du côté du carter sur son extrémité se détournant de l'organe de transmission du côté de sortie (29) et est relié à la bielle (22) dans le voisinage de sa zone de denture (20).

3. Dispositif d'entraînement selon la revendication 1 ou 2, **caractérisé en ce que** l'organe de sortie du côté de sortie (29) est formé par un pignon (18) positionné du côté du carter.

4. Dispositif d'entraînement selon une des revendications précédentes, **caractérisé en ce que** lesdits organes de transmission (12, 13, 14) reliés en entraînement par l'intermédiaire de la transmission à manivelle (15) sont disposés dans le voisinage de la base (8) du carter de transmission (2) et de manière guidée le long de celle-ci.

5. Dispositif d'entraînement selon une des revendications précédentes, **caractérisé en ce que** les deuxièmes parties de butée (31) du côté du carter sont prévues sur le côté frontal du carter de transmission (2) formé par le couvercle (8) et traversé par l'arbre de sortie (5).

6. Dispositif d'entraînement selon une des revendications précédentes, **caractérisé en ce que** l'organe de transmission du côté de sortie (13) supporte un corps de butée, notamment une goupille de butée (30), orienté dans la même direction que l'arbre de sortie (5) et dépassant en saillie entre les deuxièmes parties de butée (31).

7. Dispositif d'entraînement selon une des revendications précédentes, **caractérisé en ce que** les deuxièmes parties de butée (31) sont reçues dans des cavités du couvercle (6) et présentent des surfaces de butée du côté de la circonférence.

8. Dispositif d'entraînement selon la revendication 7, **caractérisé en ce que** les deuxièmes parties de butée (31) sont disposées de manière interchangeable.

9. Dispositif d'entraînement selon une des revendications précédentes, **caractérisé en ce que** la bielle (22) est raccordée par charnière sur un organe de transmission (12), notamment un organe de transmission (12) conçu comme un engrenage frontal (33) en tant qu'organe de transmission du côté d'entrée (12).

10. Dispositif d'entraînement selon une des revendications précédentes, **caractérisé en ce que** les deuxièmes parties de butée (31) sont conçues comme des organes d'amortissement flexibles faisant ressort.
